# EUROPÄISCHE PATENTSCHRIFT

(11) **EP 2 222 511 B1**
(45) Veröffentlichungstag und Bekanntmachung des Hinweises auf die Patenterteilung: **30.04.2014**
(21) Anmeldenummer: 08860138.0
(22) Anmeldetag: 23.10.2008
(51) Int. Cl.: B60R 21/0132

(54) **VERFAHREN UND STEUERGERÄT ZUR ANSTEUERUNG VON PERSONENSCHUTZMITTELN FÜR EIN FAHRZEUG**
METHOD AND CONTROL UNIT FOR ACTUATING PERSONAL MEANS OF PROTECTION FOR A VEHICLE
PROCÉDÉ ET APPAREIL DE COMMANDE POUR COMMANDER DES MOYENS DE PROTECTION DES PERSONNES POUR UN VÉHICULE

(30) Priorität: 12.12.2007 DE 102007059898
(43) Veröffentlichungstag der Anmeldung: 01.09.2010
(73) Patentinhaber: Robert Bosch GmbH, 70442 Stuttgart (DE)
(72) Erfinder: KUTTENBERGER, Alfred, 71083 Herrenberg (DE); RECKZIEGEL, Bastian, 73230 Kirchheim/Nabern (DE)
(86) Internationale Anmeldenummer: PCT/EP2008/064379
(87) Internationale Veröffentlichungsnummer: WO 2009/074394

(56) Entgegenhaltungen:
- EP-A- 1 000 818
- DE-A1- 10 307 463
- US-A- 5 835 007
- US-A1- 2006 052 924

## Beschreibung

### Stand der Technik

Die Erfindung betrifft ein Verfahren bzw. ein Steuergerät zur Ansteuerung von Personenschutzmitteln für ein Fahrzeug nach der Gattung der" unabhängigen Patentansprüche.

Aus DE 198 58 292 C2 ist ein Sicherheitssystem für ein Kraftfahrzeug bekannt, bei dem in Abhängigkeit von einer Relativgeschwindigkeit und einem Abstand zu einem vorausfahrenden und zum nachfolgenden Fahrzeug die Bremskraft der Bremse als Personenschutzmittel berücksichtigt wird.

Die US 200610052924 A offenbart gemäß dem Oberbegriff des Ansprüche 1 und 9 eine aktive Adaption von Fahrzeugrückhaltemitteln für eine verbesserte Robustheit einer Leistungsfähigkeit eines Insassenschutzsystems des Fahrzeugs.

Die US 5 835 007 A offenbart ein Verfahren und eine Vorrichtung für Unfalldetektion durch Verwendung von vorausschauenden Sensoreingabesignalen.

Die DE 103 07463 A1 zeigt eine Vorrichtung zur Erkennung einer Hindernisunterfahrt.

Die DE 10 2005 033 937 zeigt eine Vorrichtung bzw. ein Verfahren zur Ansteuerung von Personenschutzmitteln, wobei die Vorrichtung eine Entscheidung zur Ansteuerung in Abhängigkeit von einer Fusion von einem ersten Signal eines Precrashalgorithmus und einem zweiten Signal eines Beschleunigungsalgorithmus unterdrückt, wobei der Precrashalgorithmus oder die Fusion in Abhängigkeit eines dritten Signals einer Beschleunigungssensorik und der Beschleunigungsalgorithmus oder die Fusion in Abhängigkeit eines vierten Signals einer Precrashsensorik beeinflusst werden.

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass nunmehr passive Personenschutzmittel wie Airbags, Gurtstraffer und crashaktive Kopfstützen in Abhängigkeit von einem Schwellwertvergleich des wenigstens einen Signals der Umfeldsensorik, die den Heckbereich überwacht, erfolgt. Damit werden nunmehr auch die passiven Schutzmittel angesteuert, um einem Fahrzeuginsassen optimalen Schutz zu bieten. Der wenigstens eine Schwellwertvergleich sorgt für eine genaue Beurteilung des Signals der Umfeldsensorik. Insbesondere können damit Bereiche identifiziert werden, in denen keine Einflussnahme durch den Schwellwertvergleich auf die Ansteuerung der passiven Schutzmittel stattfinden soll.

Vorliegend werden passive Personenschutzmittel wie Airbags, Gurtstraffer und crashaktive Kopfstützen und so weiter angesteuert. Ansteuern bedeutet vorliegend die Aktivierung solcher passiven Personenschutzmittel. Bei dem Signal der Umfeldsensorik kann es sich um ein einzelnes Signal, um ein bereits vorverarbeitetes Signal oder ein Rohsignal und auch um eine Mehrzahl von Einzelsignalen handeln. Unter Vorverarbeitung werden alle möglichen Maßnahmen verstanden, wie Filterung, Mittelung, Integration, Differenzbildung und so weiter.

Bei der Umfeldsensorik handelt es sich um eine Radar-, Ultraschall-, Video- und/oder Lidar- und/oder kapazitive Sensorik, mit der das Umfeld des Heckbereichs des Fahrzeugs überwacht werden kann. Die Platzierung der Sensorik im Fahrzeug richtet sich nach ihrer Technologie.

Der wenigstens eine Schwellwertvergleich bedeutet, dass das Signal mit einer vorgegebenen Schwelle verglichen wird, wobei die Schwelle auch adaptiv ausgeführt sein kann, d.h. in Abhängigkeit von dem Signal selbst und/oder weiteren Größen beeinflusst werden kann.

Unter einem Steuergerät ist vorliegend ein elektrisches Gerät zu verstehen, das Sensorsignale wie von der Umfeldsensorik verarbeitet und in Abhängigkeit davon Ansteuerungssignale für die Personenschutzmittel ausgibt.

Unter einer Schnittstelle ist eine hard- und/oder eine softwaremäßige Realisierung zu verstehen, die das wenigstens eine Signal im Steuergerät bereitstellt. Bei einer hardwaremäßigen Realisierung ist es möglich, dass die Schnittstelle als integrierter Schaltkreis, als eine Mehrzahl von integrierten Schaltkreisen, als eine Kombination von integrierten und diskreten Bauelementen oder nur aus diskreten Bauelementen besteht. Bei einer softwaremäßigen Realisierung ist die Schnittstelle beispielsweise ein Softwaremodul, das auf einem Mikrocontroller des Steuergerätes angeordnet ist.

Auch die Auswerteschaltung kann hard- und/oder softwaremäßig ausgeprägt sein. Bei der softwaremäßigen Ausbildung ist die Auswerteschaltung ein Softwaremodul, beispielsweise auf dem Mikrocontroller des Steuergerätes, wobei die Auswerteschaltung sich die Schnittstellen des Mikrocontrollers für die Aufnahme und Abgabe von Signalen zu Nutze macht. Insbesondere weist die Auswerteschaltung einen Schwellwertvergleich als Hard- und/oder Softwaresubmodul auf. Auch eine Ausgabeschaltung ist in der Auswerteschaltung angeordnet, die in Abhängigkeit von einem Ausgangssignal des Schwellwertvergleichs ein Veranlassungssignal an die Ansteuerungsschaltung überträgt. Auch die Ausgabeschaltung kann hard- und/oder softwaremäßig ausgebildet sein.

Auch die Ansteuerungsschaltung kann hard- und/oder softwaremäßig ausgebildet sein. Insbesondere ist es möglich, dass die Ansteuerungsschaltung Teil des System-ASICS ist, das mehrere Funktionen für das Steuergerät beinhaltet.

Durch die in den abhängigen Ansprüchen aufgeführten Maßnahmen und Weiterbildungen sind vorteilhafte Verbesserungen des in den unabhängigen Patentansprüchen angegeben Verfahrens bzw. Steuergeräts zur Ansteuerung von Personenschutzmitteln für ein Fahrzeug möglich.

Es ist dabei vorteilhaft, dass wenigstens eine Ansteuerungsschwelle in Abhängigkeit von dem wenigstens einen Signal beeinflusst wird. Dies bedeutet, dass der Schwellwertvergleich, dem das wenigstens eine Signal unterzogen wird, dazu verwendet wird, die Ansteuerungsschwelle, das ist die Schwelle, die von einem Crashsignal übertroffen werden muss, um die Ansteuerung zu bewirken, beeinflusst wird. Dies kann insbesondere in einem Absenken, also einer Schärferschaltung, geschehen.

Der Schwellwertvergleich des wenigstens einen Signals kann vorteilhafterweise zur Plausibilisierung einer Ansteuerungsentscheidung verwendet werden. Damit wird diese Ansteuerungsentscheidung insbesondere bei einem Heckaufprall abgesichert.

Es ist weiterhin vorteilhaft, dass die Schwelle des Schwellwertvergleichs in Abhängigkeit von einem Vergleich verändert wird. Damit kann eine adaptive Schwelle ausgeführt werden.

Es ist weiterhin vorteilhaft, dass die Beeinflussung der wenigstens einen Ansteuerungsschwelle und/oder die Veränderung der wenigstens einen Ansteuerungsschwelle in Abhängigkeit von dem wenigstens einen Signal für eine vorgegebene Zeit vorgenommen und dann wieder zurückgenommen wird. Dies berücksichtigt, dass die Schärferschaltung nur für einen bestimmten Zeitraum beispielsweise vorgenommen wird, um unnötige Auslösesituationen der passiven Personenschutzmittel zu vermeiden.

Vorteilhafterweise kann als das wenigstens eine Signal eine Objektart verwendet werden. Beispielsweise ist die Objektart ein PKW oder ein LKW oder ein Motorrad und kann so eine bestimmte Schwellenanpassung der Ansteuerungsschwelle bewirken.

Es ist weiterhin vorteilhaft, dass das wenigstens eine Signal nach einer bestimmten Zeit mit der Minimalschwelle verglichen wird. Damit kann eine zu späte Auslösung der Personenschutzmittel verhindert werden.

Es ist weiterhin vorteilhaft, dass die Ansteuerungsabhängigkeit von einer Fahrtrichtung unterdrückt wird. Damit können solche Crashszenarios identifiziert werden, bei denen eine Ansteuerung der Personenschutzmittel nicht erfolgen soll. Beispielsweise kann im Falle eines Rückwärtsfahrens erkennbar an der Eigengeschwindigkeit oder durch Auswertung des Fahrstufenreglers (Rückwärtsgang) die Auslösung der passiven Personenschutzmittel unterbunden werden.

Ausführungsbeispiele der Erfindung sind in der Zeichnung dargestellt und werden in der nachfolgenden Beschreibung näher erläutert.

Es zeigen Figur 1 ein Blockschaltbild des erfindungsgemäßen Steuergeräts mit angeschlossenen Komponenten in einem Fahrzeug. Figur 2 zeigt ein Blockschaltbild eines Mikrocontrollers in einem erfindungsgemäßen Steuergerät. Figur 3 zeigt ein erstes Flussdiagramm. Figur 4 zeigt ein zweites Flussdiagramm und Figur 5 zeigt ein drittes Flussdiagramm.

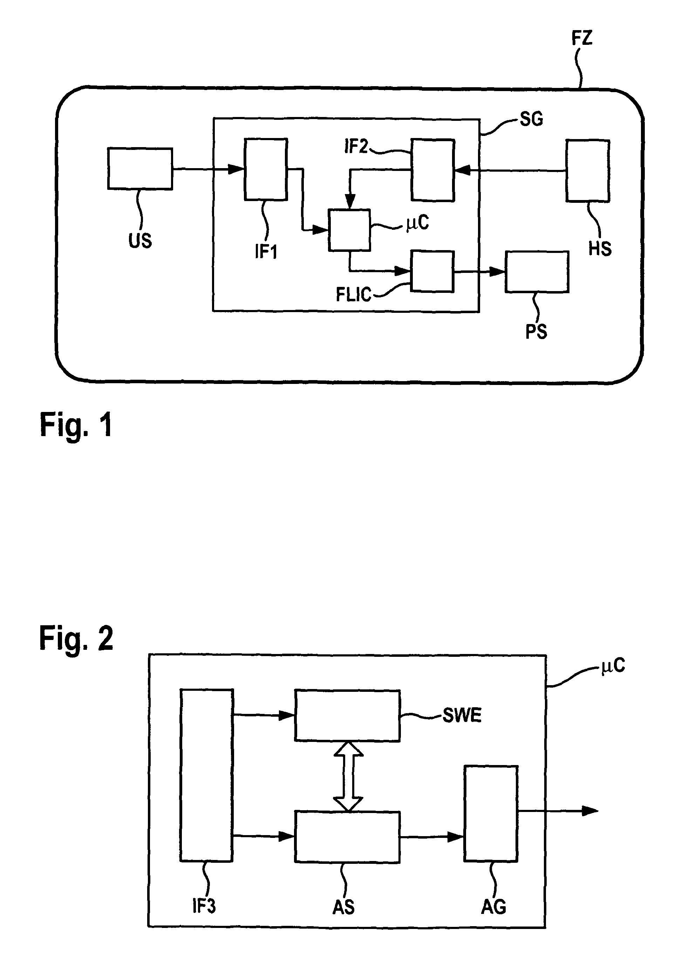

Figur 1 zeigt das erfindungsgemäße Steuergerät SG in einem Fahrzeug FZ mit angeschlossen Komponenten einer Unfallsensorik US, einer Hecksensorik HS und den passiven Personenschutzmitteln PS.

Die Unfallsensorik US ist vorliegend als außerhalb des Steuergerätes SG angeordnet gezeichnet. Es ist möglich, dass Teile der Unfallsensorik US sich innerhalb des Steuergerätes SG befinden. Die Unfallsensorik US kann Beschleunigungssensoren, Körperschallsensoren, Luftdrucksensoren, Kraftsensoren und/oder alle anderen bekannten Sensoren zur Detektion eines Unfalls aufweisen. Die Signale der Unfallsensorik US werden üblicherweise digital, beispielsweise über eine Stromschnittstelle an die Schnittstelle IF1 im Steuergerät SG, übertragen, wobei die Schnittstelle IF1 vorliegend hardwaremäßig ausgeführt ist, beispielsweise als Teil eines sogenannten System-ASICS, das viele Funktionen des Steuergerätes SG beinhaltet.

Die Hecksensorik HS, die vorliegend als eine Unfallsensorik ausgebildet ist, die im Heckbereich des Fahrzeugs FZ überwacht, ist an die Schnittstelle IF2 angeschlossen, die sich ebenfalls im Steuergerät SG befindet. Auch die Schnittstelle IF2 ist vorliegend hardwaremäßig ausgebildet und kann ebenfalls Teil des System-ASICS sein. Bei der Hecksensorik HS handelt es sich um eine Umfeldsensorik wie Ultraschall, Video oder Radar oder Lidar oder eine kapazitive Umfeldsensorik, die derart angeordnet ist, dass sie den Heckbereich des Fahrzeugs FZ überwacht. Auch diese Daten werden digital an das Steuergerät SG übertragen.

Ein Mikrocontroller µC im Steuergerät SG verarbeitet die Sensorsignale der Unfallsensorik US bzw. der Hecksensorik HS. In Abhängigkeit davon erzeugt der Mikrocontroller µC ein Ansteuersignal, das einer Ansteuerschaltung FLIC zugeführt wird, um eine Ansteuerung der Personenschutzmittel PS zu bewirken. Die Ansteuerungsschaltung FLIC kann ebenfalls Teil des System-ASICS sein.

Erfindungsgemäß wird die Ansteuerungsentscheidung in Abhängigkeit von einem Schwellwertvergleich des Signals von der Hecksensorik HS beeinflusst. Dies kann beispielsweise dadurch geschehen, dass in Abhängigkeit von dem Schwellwertvergleich des Signals von der Hecksensorik HS entschieden wird, ob eine Ansteuerschwelle, die durch das Signal der Unfallsensorik US übertroffen werden muss, verändert wird, insbesondere abgesenkt wird. Vorliegend sind, wenn von Signalen gesprochen wird, auch die Fälle eingeschlossen, die die verarbeiteten Signale meinen. Das heißt, es wird nicht unbedingt ein Rohsignal der Unfallsensorik oder der Hecksensorik verwendet, sondern beispielsweise ein gefiltertes, gemitteltes oder integriertes Signal. Auch andere Verarbeitungsmethoden sind vorliegend denkbar.

Figur 2 zeigt den Mikrocontroller µC mit Softwaremodulen, die jedoch auch einzeln, in Gruppen oder gesamt als Hardwaremodule ausgeführt sein können. Die Schnittstelle IF3 stellt die Signale der Unfallsensorik US und der Hecksensorik HS im Mikrocontroller µC für den Algorithmus und die Schwellwerteinflussnahme SWE bereit. Der Algorithmus AS bestimmt, ob die passiven Personenschutzmittel angesteuert werden sollen oder nicht. In dem Modul SWE wird anhand des Signals der Hecksensorik HS ermittelt, ob in Abhängigkeit von diesem Signal die Ansteuerungsentscheidung im Algorithmus AS beeinflusst werden soll oder nicht. Die entsprechende Beeinflussung wird in Abhängigkeit von wenigstens einem Schwellwertvergleich dieses Signals ermittelt. Hat der Algorithmus AS eine Ansteuerungsentscheidung letztlich getroffen, übergibt er dies an die Ausgabeschaltung AG. Diese überträgt mittels der Hardware des Mikrocontrollers µC ein Signal an die Ansteuerungsschaltung FLIC, um diese Ansteuerungsschaltung zu veranlassen, die Personenschutzmittel PS zu aktivieren, beispielsweise durch eine Bestromung von Zündelementen. Auch die Ansteuerung eines elektromotorisch ansteuerbaren Gurtstraffers ist dabei möglich.

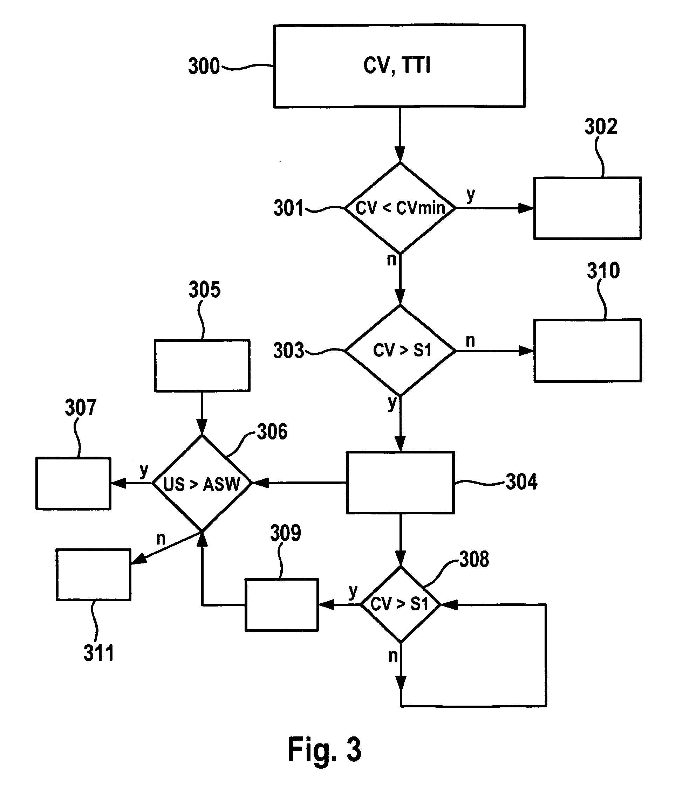

Figur 3 zeigt in einem Flussdiagramm das erfindungsgemäße Verfahren. In Verfahrensschritt 300 wird aus dem Signal der Hecksensorik HS als Parameter die Relativgeschwindigkeit zwischen dem Aufprallobjekt und dem Fahrzeug CV sowie die Zeit bis zum Aufprall - auch als time to impact TTI bezeichnet - ermittelt.

In Verfahrensschritt 301 wird dann geprüft, ob die Relativgeschwindigkeit CV kleiner als eine Minimalschwelle CVmin ist. Ist dies der Fall, dann wird in Verfahrensschritt 302 die Ansteuerung der Personenschutzmittel unterdrückt. Ist dies nicht der Fall, dann wird in Verfahrensschritt 301 geprüft, ob die Relativgeschwindigkeit größer als eine erste Schwelle S1 ist. Ist das nicht der Fall, dann wird in Verfahrensschritt 310 keine Einflussnahme auf die Bildung der Ansteuerungsentscheidung durchgeführt, denn man befindet sich dann innerhalb des Bereichs der Relativgeschwindigkeit zwischen der Minimalschwelle CVmin und der ersten Schwelle S1. Wurde jedoch durch die Relativgeschwindigkeit CV die erste Schwelle S1 übertroffen, dann wird in Verfahrensschritt 304 eine Beeinflussung der Ansteuerungsschwelle vorgenommen. Dabei wird in einem ersten Pfad ein Einfluss auf die Anssteuerungsschwelle ASW in Verfahrensschritt 306 vorgenommen. In Verfahrensschritt 306 wird nämlich das Unfallsignal 305 US mit der Ansteuerungsschwelle ASW verglichen. Diese Ansteuerungsschwelle wird durch den Verfahrensschritt 304 beeinflusst. Beispielsweise durch ein Absenken, sprich ein Schärferschalten. Wurde die Ansteuerungsschwelle durch das Unfallsignal US übertroffen, dann erfolgt in Verfahrensschritt 307 die Ansteuerung. Dies erfolgt jedoch nur, wenn ausgehend von Verfahrensschritt 304 in Verfahrensschritt 308 und 309 eine Plausibilisierung anhand des Signals der Hecksensorik durchgeführt wurde. Diese unabhängige Entscheidung ist bei Ansteuerungsentscheidungen oft ein notwendiges Kriterium. Diese Plausibilisierung wird dadurch durchgeführt, dass in Verfahrensschritt 308 die Relativgeschwindigkeit mit einer zweiten Schwelle S2 verglichen wird. Wird diese Schwelle übertroffen, dann wird in Verfahrensschritt 309 die Plausibilisierung festgestellt und dies in Verfahrensschritt 306 berücksichtigt. Ist die Plausibilisierung nicht festgestellt worden, dann wird dies weiter geprüft.

Die Zeit bis zum Aufprall TTI kann zur Bestimmung eines Bereichs verwendet werden, in welchem eine Schwellenbeeinflussung zugelassen wird. So kann nach Initiierung eines Zählers dieser in jedem Rechenzyklus reduziert werden. Unterschreitet der Zähler einen Schwellwert S1, so wird im Falle eines Crash verglichen, ob der Zähler unter diesem Schwellwert S1 und über einem weiteren Schwellwert S2 liegt. Im Falle, dass beide Bedingungen erfüllt sind, werden die Schwellen zur Auslösung der Rückhaltemittel abhängig von der Relativgeschwindigkeit und/oder weiterer Parameter beeinflusst.

Wurde in Verfahrensschritt 306 festgestellt, dass das Unfallsignal US nicht über der Ansteuerungsschwelle ASW liegt, dann endet das Verfahren in Verfahrensschritt 311.

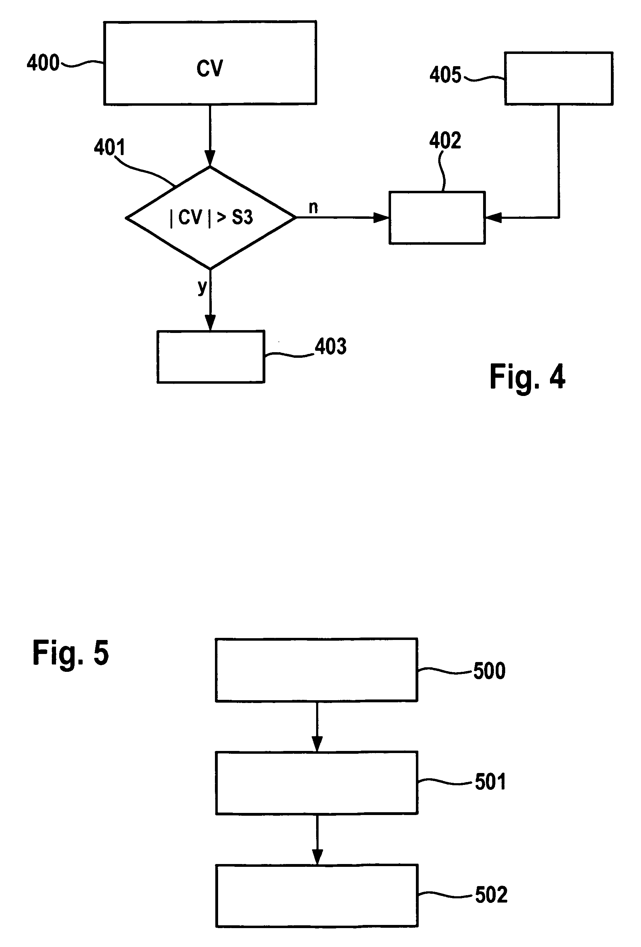

Figur 4 zeigt ein weiteres Flussdiagramm des erfindungsgemäßen Verfahrens. In Verfahrensschritt 400 wird die Relativgeschwindigkeit vom Signal der Hecksensorik HS bereitgestellt. In Verfahrensschritt 401 wird der Betrag der Heckgeschwindigkeit mit einer dritten Schwelle S3 verglichen. Ist der Betrag über der Schwelle S3, dann erfolgt die Ansteuerung in Verfahrensschritt 403. Ist jedoch der Betrag nicht über der Schwelle S3, dann wird in Verfahrensschritt 402 wegen fehlender Plausibilisierung eine Unterdrückung der Ansteuerung durchgeführt. Dies wird auch durchgeführt, wenn sich das Fahrzeug in einer Rückwärtsbewegung befindet, was in Verfahrensschritt 405 ermittelt wird.

Figur 5 zeigt noch einmal, dass ein Rückwärtsfahren zur Unterbindung der Ansteuerung führt. In Verfahrensschritt 500 wird das Signal der Hecksensorik bereitgestellt. In Verfahrensschritt 501 wird anhand der Eigengeschwindigkeit oder der Auswertung des Fahrstufenreglers ermittelt, ob ein Rückwärtsfahren vorliegt. Dann erfolgt in Verfahrensschritt 502 keine Ansteuerung.

Die Beeinflussung der Ansteuerungsschwelle kann kontinuierlich oder in verschiedenen Stufen oder durch eine mathematische Vorschrift vorgegeben sein.

## Patentansprüche

1. Verfahren zur Ansteuerung von Personenschutzmitteln (PS) für ein Fahrzeug (FZ), wobei die Ansteuerung in Abhängigkeit von wenigstens einem Signal einer einen Heckbereich des Fahrzeugs (FZ) überwachenden Umfeldsensorik (US) erfolgt, wobei aus dem Signal als Parameter die Relativgeschwindigkeit zwischen einem Aufprallobjekt und dem Fahrzeug ermittelt wird, wobei die Ansteuerung von passiven Personenschutzmitteln (PS) in Abhängigkeit von wenigstens einem Schwellwertvergleich des wenigstens einen Signals erfolgt, **dadurch gekennzeichnet, dass**, wenn die Relativgeschwindigkeit kleiner als eine Minimalschwelle (CV min) ist, die Ansteuerung unterdrückt wird und wobei bei dem Verfahren die Ansteuerung in Abhängigkeit von der Fahrtrichtung unterdrückt wird.

2. Verfahren nach Anspruch 1, **dadurch gekennzeichnet, dass** wenigstens eine Ansteuerungsschwelle in Abhängigkeit von dem wenigstens einen Signal beeinflusst wird.

3. Verfahren nach Anspruch 1, **dadurch gekennzeichnet, dass** der Schwellwertvergleich mit der Minimalschwelle zur Plausibilisierung verwendet wird.

4. Verfahren nach Anspruch 3, **dadurch gekennzeichnet, dass** wenigstens eine Schwelle des Schwellwertvergleichs in Abhängigkeit vom Vergleich verändert wird.

5. Verfahren nach einem der vorhergehenden Ansprüche 3 - 4, **dadurch gekennzeichnet, dass** die Beeinflussung der wenigstens einen Ansteuerungsschwelle und/oder die Veränderung der wenigstens einen Schwelle in Abhängigkeit von dem wenigsten einen Signal für eine vorgegebene Zeit vorgenommen wird und dann wieder zurückgenommen wird.

6. Verfahren nach Anspruch 3 bis 5, **dadurch gekennzeichnet, dass** eine Plausibilisierung dadurch durchgeführt wird, dass die Relativgeschwindigkeit mit einer Schwelle verglichen wird, und wenn diese Schwelle übertroffen wird , die Plausibilisierung festgestellt wird.

7. Verfahren nach einem der vorhergehenden Ansprüche, **dadurch gekennzeichnet, dass** als das wenigstens eine Signal eine Objektart verwendet wird.

8. Verfahren nach Anspruch 1, **dadurch gekennzeichnet, dass** das wenigstens ein Signal nach einer bestimmten Zeit mit der Minimalschwelle verglichen wird.

9. Steuergerät (SG) zur Ansteuerung von Personenschutzmitteln (PS) für ein Fahrzeug (FZ) mit:
- einer Schnittstelle (IF2), die wenigstens ein Signal einer einen Heckbereich des Fahrzeugs überwachenden Umfeldsensorik bereitstellt,
- eine Auswerteschaltung (µC), die in Abhängigkeit von dem wenigstens einen Signal eine Ansteuerungsschaltung (FLIC) zur Ansteuerung der Personenschutzmittel (PS) veranlasst,
wobei die Auswerteschaltung (µC) einen Schwellwertvergleicher (SWE) für das wenigstens eine Signal aufweist, wobei aus dem Signal als Parameter die Relativgeschwindigkeit zwischen einem Aufprallobjekt und dem Fahrzeug ermittelt wird, wobei weiterhin eine Ausgabeschaltung (AG) vorgesehen ist, die in Abhängigkeit von einem Ausgangssignal des Schwellwertvergleichers ein Veranlassungssignal an die Ansteuerungsschaltung (FLIC) überträgt, sodass die Ansteuerungsschaltung (FLIC) passive Personenschutzmittel (PS) ansteuert, **dadurch gekennzeichnet, dass** die Auswerteschaltung (µC) eine Ansteuerung unterdrückt, wenn die Relativgeschwindigkeit kleiner als eine Minimalschwelle ist, und wobei die Auswerteschaltung (µC) die Ansteuerung in Abhängigkeit von der Fahrtrichtung unterdrückt.

## Claims

1. Method for actuating personal means of protection (PS) for a vehicle (FZ), the actuation being effected on the basis of at least one signal from an environment sensor system (US) which monitors a rear area of the vehicle (FZ), the relative speed between an impact object and the vehicle being determined from the signal as a parameter, passive personal means of protection (PS) being actuated on the basis of at least one threshold value comparison of the at least one signal, **characterized in that** the actuation is suppressed if the relative speed is lower than a minimum threshold (CVmin), the actuation being suppressed on the basis of the direction of travel in the method.

2. Method according to Claim 1, **characterized in that** at least one actuation threshold is influenced on the basis of the at least one signal.

3. Method according to Claim 1, **characterized in that** the threshold value comparison with the minimum threshold is used to check plausibility.

4. Method according to Claim 3, **characterized in that** at least one threshold of the threshold value comparison is changed on the basis of the comparison.

5. Method according to one of the preceding Claims 3-4, **characterized in that** the influencing of the at least one actuation threshold and/or the changing of the at least one threshold on the basis of the at least one signal is/are carried out for a predefined time and is/are then cancelled again.

6. Method according to Claims 3 to 5, **characterized in that** the plausibility check is carried out by comparing the relative speed with a threshold value and determining plausibility if this threshold is exceeded.

7. Method according to one of the preceding claims, **characterized in that** a type of object is used as the at least one signal.

8. Method according to Claim 1, **characterized in that** the at least one signal is compared with the minimum threshold after a particular time.

9. Control unit (SG) for actuating personal means of protection (PS) for a vehicle (FZ), having:
- an interface (IF2) which provides at least one signal from an environment sensor system which monitors a rear area of the vehicle,
- an evaluation circuit (µC) which, on the basis of the at least one signal, prompts an actuation circuit (FLIC) to actuate the personal means of protection (PS),
the evaluation circuit (µC) having a threshold value comparator (SWE) for the at least one signal, the relative speed between an impact object and the vehicle being determined from the signal as a parameter, an output circuit (AG) also being provided, which output circuit transmits a prompt signal to the actuation circuit (FLIC) on the basis of an output signal from the threshold value comparator, with the result that the actuation circuit (FLIC) actuates passive personal means of protection (PS), **characterized in that** the evaluation circuit (µC) suppresses actuation if the relative speed is lower than a minimum threshold, the evaluation circuit (µC) suppressing the actuation on the basis of the direction of travel.

## Revendications

1. Procédé de commande de moyens (PS) de protection des personnes pour un véhicule automobile (FZ),
la commande ayant lieu en fonction d'au moins un signal d'un ensemble (US) de capteurs d'environnement qui surveillent la région située à l'arrière du véhicule (FZ),
la vitesse relative entre un objet de collision et le véhicule étant déterminée comme paramètre à partir du signal,
la commande de moyens passifs (PS) de protection des personnes ayant lieu en fonction d'au moins une comparaison du ou des signaux avec une valeur de seuil, **caractérisé en ce que**
la commande est bloquée si la vitesse relative est inférieure à un seuil minimum (CVₘᵢₙ) et
**en ce que** dans le procédé, la commande est bloquée en fonction du sens de déplacement du véhicule.

2. Procédé selon la revendication 1, **caractérisé en ce qu'**il agit sur au moins un seuil de commande en fonction du ou des signaux.

3. Procédé selon la revendication 1, **caractérisé en ce que** la comparaison des valeurs de seuil avec le seuil minimum est utilisée pour une plausibilisation.

4. Procédé selon la revendication 3, **caractérisé en ce qu'**au moins un seuil de la comparaison des valeurs de seuil est modifié en fonction de la comparaison.

5. Procédé selon l'une des revendications 3 à 4 qui précèdent, **caractérisé en ce que** l'action sur le ou les seuils de commande et/ou la modification du ou des seuils sont réalisés en fonction du ou des signaux pendant une durée prédéterminée, avant retour à la situation antérieure.

6. Procédé selon les revendications 3 à 5, **caractérisé en ce que** la plausibilisation est réalisée en comparant la vitesse relative à un seuil et en concluant à la plausibilité si ce seuil a été dépassé.

7. Procédé selon l'une des revendications précédentes, **caractérisé en ce qu'**un type d'objet est utilisé en tant que signal ou signaux.

8. Procédé selon la revendication 1, **caractérisé en ce que** le ou les signaux sont comparés au seuil minimum après une durée définie.

9. Appareil de commande (SG) destiné à commander des moyens (PS) de protection des personnes pour un véhicule (FZ), l'appareil comportant :
une interface (IF2) qui délivre au moins un signal d'un ensemble de capteurs d'environnement qui surveillent la région située à l'arrière du véhicule,
un circuit d'évaluation (µC) qui amène un circuit de commande (FLIC) à commander les moyens (PS) de protection des personnes en fonction du ou des signaux,
le circuit d'évaluation (µC) présentant un comparateur (SWE) de valeurs de seuil pour le ou les signaux, la vitesse relative entre un objet de collision et le véhicule étant déterminée comme paramètre à partir du signal,
un circuit de sortie (AG) qui transfère un signal d'activation au circuit de commande (FLIC) en fonction du signal de sortie du comparateur de valeurs de seuil étant prévu de telle sorte que le circuit de commande (FLIC) commande des moyens passifs (PS) de protection des personnes,
**caractérisé en ce que**
le circuit d'évaluation (µC) bloque la commande si la vitesse relative est inférieure à un seuil minimum et
**en ce que** le circuit d'évaluation bloque la commande en fonction du sens de déplacement du véhicule.
